# EUROPEAN PATENT SPECIFICATION

(11) **EP 2 074 718 B1**
(45) Date of publication and mention of the grant of the patent: **18.11.2015**
(21) Application number: 07761566.4
(22) Date of filing: 30.04.2007
(51) Int. Cl.: H04W 28/26, H04M 1/725, G06Q 10/02, G06Q 10/06

(54) **DEVICE AND METHOD FOR RESERVING A RESOURCE VIA A PORTABLE COMMUNICATION DEVICE**
EINRICHTUNG UND VERFAHREN ZUM RESERVIEREN EINES BETRIEBSMITTELS ÜBER EIN TRAGBARES KOMMUNIKATIONSGERÄT
DISPOSITIF ET PROCÉDÉ POUR RÉSERVER UNE RESSOURCE VIA UN DISPOSITIF DE COMMUNICATION PORTABLE

(30) Priority: 10.10.2006 US 548192
(43) Date of publication of application: 01.07.2009
(73) Proprietor: Sony Ericsson Mobile Communications AB, 221 88 Lund (SE)
(72) Inventor: BLOEBAUM, L. Scott, Cary, NC 27519 (US); JOHNSON, P. Marc, Durham, NC 27713 (US); HOMILLER, Daniel P., Cary, NC 27513 (US)
(74) Representative: Hoffmann Eitle
(86) International application number: PCT/US2007/067759
(87) International publication number: WO 2008/045585

(56) References cited:
- EP-A2- 1 398 968
- US-A1- 2002 116 233
- US-A1- 2003 097 284

## Description

### TECHNICAL FIELD OF THE INVENTION

The present invention relates generally to portable communication devices, and, more particularly, to a portable communication device and method for reserving a resource.

### DESCRIPTION OF RELATED ART

In recent years, portable communication devices, such as mobile phones, personal digital assistants, mobile terminals, etc., continue to grow in popularity. As the popularity of portable communication devices continues to grow, today's wireless landscape is rapidly changing as mobile phones and networks are being enhanced to provide features and services beyond voice communications. The wireless industry is experiencing a rapid expansion of mobile data services. In addition, the features associated with certain types of portable communication devices have become increasingly diverse. To name a few examples, many portable communication devices have cameras, text messaging capability, Internet browsing functionality, electronic mail capability, video playback capability, audio playback capability, image display capability, position sensing capability and hands-free headset interfaces.

Certain "scarce resources," such as conference rooms, office equipment and resources, pool tables, electronic dart boards, arcade games and the like, may only be used by one person or group of persons at one time. Various methods have been employed to facilitate a person or group making a reservation to use these resources (or being added to a queue or waiting list for use of these resources). These methods typically include sign-up sheets or other hard-copy-based reservation methods or simply waiting in line until the desired resource is available for use.

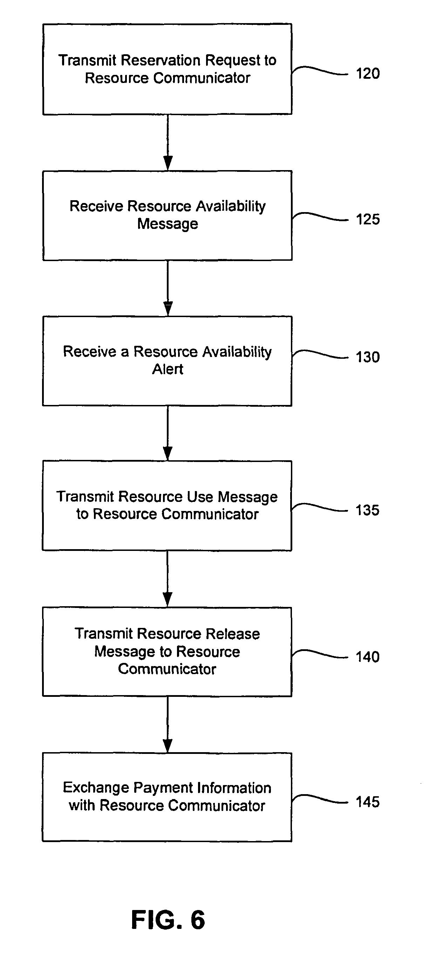

D1 (US 2002/0116233 to Kuge) discloses a system where the user makes a time-based reservation (paragraphs 80 and 84 and figure 6). The user is notified shortly before the reservation time (paragraph 93) and is guided from the user's current location to a place of the attraction for which the reservation is made (paragraph 102).

D2 (US 2003/0097284 to Shinozaki) discloses a system where the user makes an advance reservation and, if the user is not located at the reserved resource at the time of the user's reservation, the user's reservation is cancelled to accommodate stand-by persons.

D3 (EP 1 398 968 to Anzai) discloses a way to provide information related to advertising content in combination with content (e.g., a movie) requested by a user. The context and problem addressed by Anzai are vastly different than that of the claim invention.

### SUMMARY

There is a pervasive trend in the art of portable communication devices and application programs for portable communication to enhance the functionality of and uses for portable communication devices.

In view of the foregoing, a need exists for additional mobile data services, and application programs for providing additional mobile data services, such as application programs that facilitate reserving resources and receiving information related to reservations for resources.

The present invention is defined in the appended claims.

One aspect of the invention relates to a method of reserving a resource via a portable communication device that includes wirelessly retrieving reservation availability information from a resource communicator, displaying the reservation availability information, receiving user input indicative of a reservation request, and wirelessly transmitting the reservation request to the resource communicator.

According to another aspect, wirelessly retrieving includes retrieving reservation availability information via a localized communication link.

According to another aspect, the localized communication link is a near field communication (NFC) link.

According to another aspect, wirelessly transmitting includes transmitting the reservation request to the resource communicator via a localized communication link.

According to another aspect, the localized communication link is a near field communication (NFC) link.

According to another aspect, the method is carried out via a portable communication device including a near field communication (NFC) module.

According to another aspect, at least one of the wirelessly retrieving and wirelessly transmitting are performed via a near field communications (NFC) module while the portable communication device is in proximity to the resource communicator.

According to another aspect, the reservation availability information includes a calendar related to availability of the resource.

According to another aspect, the portable communication device is a mobile telephone.

According to another aspect, the wirelessly retrieving and wirelessly transmitting steps are performed when the portable communication device is in proximity to the resource communicator.

Another aspect of the invention relates to a program stored on a machine-readable medium, the program being suitable for use in a portable communication device, wherein when the program is loaded in memory in the portable communication device and executed causes the portable communication device to wirelessly retrieve reservation availability information from a resource communicator, display the reservation availability information, receive user input indicative of a reservation request, and wirelessly transmit the reservation request to the resource communicator.

According to another aspect, the program causes the portable communication device to wirelessly retrieve and/or wirelessly transmit via a near field communications (NFC) link.

According to another aspect, the program causes the portable communication device to display a calendar representative of reservation availability.

According to another aspect, a portable communication device includes a memory, a localized communicator and a controller that executes an application program within the memory, where the application program, when executed, causes the portable communication device to wirelessly retrieve reservation availability information from a resource communicator, display the reservation availability information, receive user input indicative of a reservation request, and wirelessly transmit the reservation request to the resource communicator.

According to another aspect, the localized communicator is a near field communications (NFC) module.

Another aspect of the invention relates to a method of reserving a resource via a portable communication device that includes at least one of wirelessly transmitting a reservation request to a resource communicator via a localized communication link and wirelessly receiving a resource availability message from the resource communicator via a localized communication link.

According to another aspect, the resource availability message is indicative of a position in a queue associated with the resource.

According to another aspect, the method further includes wirelessly receiving a resource available alert from the resource communicator.

According to another aspect, the method further includes wirelessly transmitting a resource release message to the resource communicator.

According to another aspect, the method further includes exchanging payment information with the resource communicator, the payment information being representative of payment for use of the resource.

According to another aspect, the localized communication link is a near field communications (NFC) link.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications coming within the terms of the claims appended thereto.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF DRAWINGS

Many aspects of the invention can be better understood with reference to the following drawings. The components in the drawings are not necessarily to scale, emphasis instead being placed upon clearly illustrating the principles of the present invention. Likewise, elements and features depicted in one drawing may be combined with elements and features depicted in additional drawings. Moreover, in the drawings, like reference numerals designate corresponding parts throughout the several views.
FIG. 1 is a diagrammatic illustration of a mobile telephone as an exemplary portable communication device;
FIG. 2 is a diagrammatic illustration of a portable communication device in accordance with aspects of the present invention;
FIG. 3 is a diagrammatic illustration of a portable communication device in proximity to resource;
FIG. 4 is a diagrammatic illustration of a portable communication device in proximity to a resource within a resource network;
FIG. 5 is a flow chart or functional diagram representing a method of reserving a resource using a portable communication device;
FIG. 6 is a flow chart or functional diagram representing a method of reserving a resource using a portable communication device; and
FIG. 7 is a flow chart or functional diagram representing a method of managing reservations for one or more resources.

### DETAILED DESCRIPTION OF EMBODIMENTS

In the detailed description that follows, like components have been given the same reference numerals regardless of whether they are shown in different embodiments of the present invention. To illustrate the present invention in a clear and concise manner, the drawings may not necessarily be to scale and certain features may be shown in somewhat schematic form.

As used herein, the term "portable communication device" includes portable radio communication equipment. The term "portable radio communication equipment", which herein after may be referred to as a mobile phone, a mobile device, a mobile radio terminal or a mobile terminal, includes all electronic equipment, including, but not limited to, mobile telephones, pagers, communicators, i.e., electronic organizers, smartphones, personal digital assistants (PDAs), or the like. While aspects of the present invention are being discussed with respect to portable communication devices, it is to be appreciated that the invention is not intended to be limited to portable communication devices, and can be applied to any type of electronic equipment capable of being used for voice and/or data communication via a localized communicator, e.g., a near field communications (NFC)-enabled device.

In addition, as used herein, the term "resource" includes any item, room, venue, location, seat within a location, place, device, game or the like that may only be used by one person, a group of persons and/or a limited number of persons at one time, including, but not limited to, conference rooms, office equipment and office resources, pool tables, electronic dart boards, arcade games and the like. It is to be appreciated that the term "resource" also may include groups or networks of resources, e.g., a group of pool tables within a pool hall.

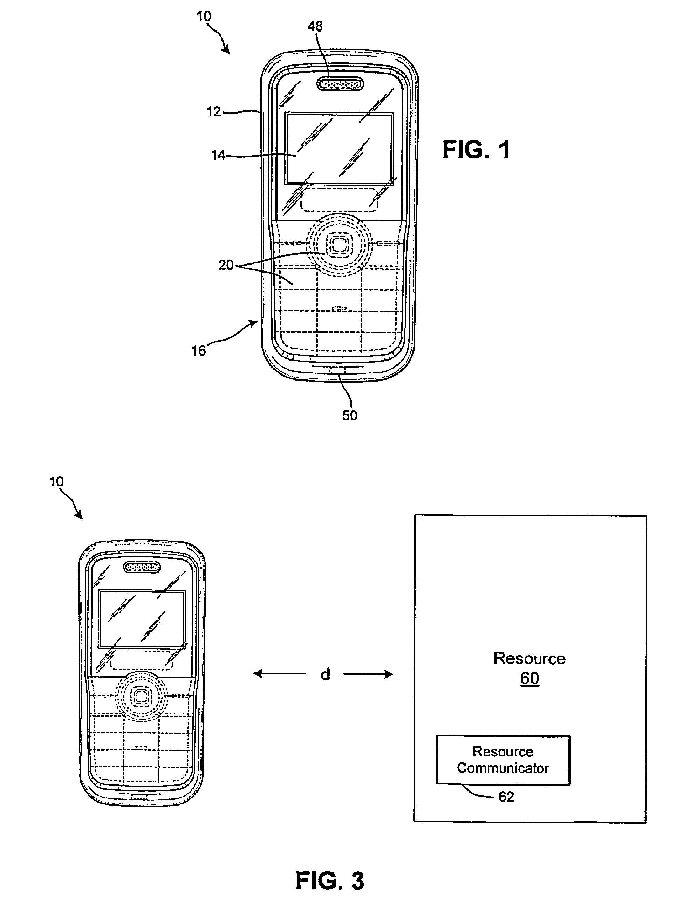

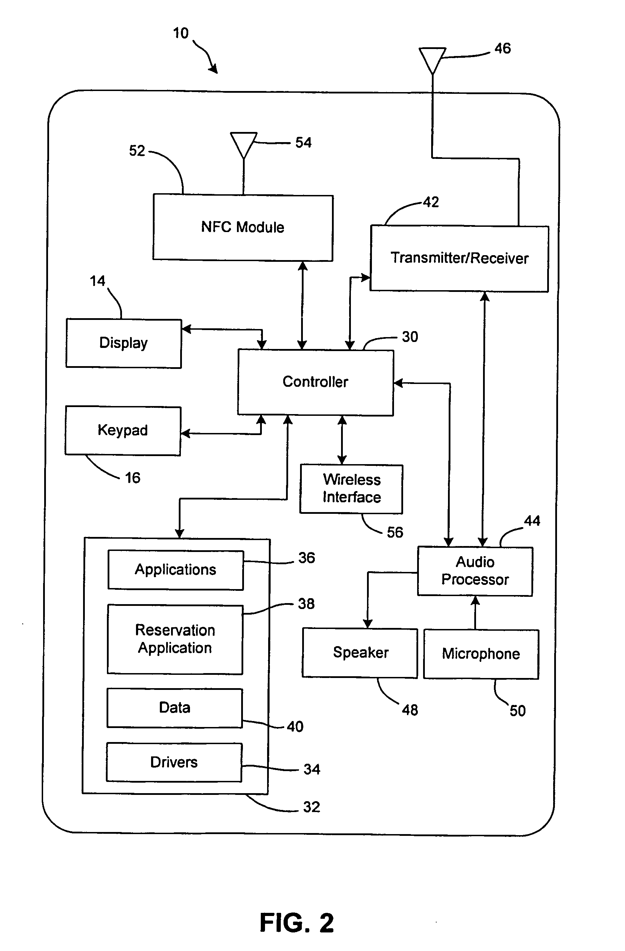

Referring initially to FIG. 1 and FIG. 2, an exemplary embodiment of a portable communication device 10, e.g., a mobile phone, mobile terminal or the like, is depicted. As is described more fully below, the portable communication device 10 includes a reservation application e.g., an application program, code or logic routine that is executed by the portable communication device, and wireless interface device, such as a localized communicator, e.g., a near field communication (NFC) module, that enable the user of a portable communication device to conveniently establish reservations for use of various resources, e.g., conference rooms, pool tables and the like. In addition, the resource may execute an application program or other logic routine to support or provide information to the requesting portable communication device regarding reservation availability and/or resource availability in the case of a network of resources.

Stated differently, the portable communication device 10 supports a reservation application, e.g., by including appropriate hardware and/or an application program for making a reservation for use of a resource. For purposes of the discussion herein, portable communication device 10 will be described in terms of wirelessly retrieving reservation availability information from a resource and wirelessly transmitting a reservation request to a resource via a localized communication link.

The portable communication device in the illustrated embodiments is a mobile telephone, and may be referred to as the mobile telephone 10. As indicated, the description and illustrations of a mobile telephone for the portable communication device is intended to serve as a non-limiting exemplary environment for the inventive concepts described herein. The mobile telephone 10 is shown as having a "brick" or "block" form factor housing 12, but it will be appreciated that other types of housings, such as a clamshell housing or a slide-housing, may be utilized.

The mobile telephone 10 includes a display 14 and keypad 16. As is conventional, the display 14 displays information to a user, such as operating state, time, telephone numbers, contact information, various navigational menus and the like, which enable the user to utilize the various features of the mobile telephone 10. The display 14 also may be used to visually display content, e.g., reservation availability information, received by the mobile telephone 10 and/or retrieved from a memory 32 (FIG. 2) of the mobile telephone 10.

Similarly, the keypad 16 may be conventional in that it provides for a variety of user input operations. For example, the keypad 16 typically includes alphanumeric keys 20 for facilitating entry of alphanumeric information, such as telephone numbers, phone lists, contact information, notes and the like. In addition, the keypad 16 typically includes special function keys, such as a "call send" key for initiating or answering a call, and a "call end" key for ending or "hanging up" a call. Special function keys also may include menu navigation keys, for example, for navigating through a menu displayed on the display to select different telephone functions, profiles, settings, etc., as is conventional. Other keys associated with the mobile telephone may include a volume key, an audio mute key, an on/off power key, a web browser launch key, a camera key and the like. Keys or key-like functionality also may be embodied as a touch screen associated with the display 14. While some embodiments of the search application may not involve keypad-based user interaction with the mobile telephone 10, other embodiments may include keypad interaction with the search application, such as entering a reservation request, setting up various other options, data selection and the like.

The mobile telephone 10 includes conventional call circuitry that enables the mobile telephone 10 to establish a call or otherwise exchange signals with a call/calling device, typically another mobile telephone, landline telephone or other electronic device. However, the call/calling device need not be another telephone, but may be some other device, such as an Internet web server, content providing server, media server or the like. The call circuitry also may be responsible for transmitting text messages that are prepared by the user.

FIG. 2 represents a functional block diagram of a portable communication device 10. The portable communication device 10 includes a controller 30 that controls the overall operation of the portable communication device. The controller 30 may include any commercially available or custom microprocessor or microcontroller. Memory 32 is operatively connected to the controller 30 for storing control programs and data used by the portable communication device. The memory 32 is representative of the overall hierarchy of memory devices containing software and data used to implement the functionality of the portable communication device in accordance with one or more aspects described herein. The memory 32 may include, for example, one or more of a buffer, a flash memory, a hard drive, a removable media, a volatile memory, a non-volatile memory or other suitable device. In addition to handling voice communications, the portable communication device 10 may be configured to transmit, receive and process data, such as text messages, e.g., sometimes referred to by some as an SMS, electronic mail messages, multimedia messages, e.g., sometimes referred to as an MMS, image files, video files, audio files, ring tones, streaming audio, streaming video, data feeds (including podcasts) and so forth.

In the illustrated embodiment, memory 32 stores drivers 34, e.g., I/O device drivers, application programs 36, including a reservation application program 38, and application program data 40. The I/O device drivers include software routines that are accessed through the controller 30 (or by an operating system (not shown) stored in memory 32) by the application programs, including the reservation application program 38, to communicate with devices such as the display 14 and other input/output ports.

The application programs 36, including the reservation application program 38, comprise programs that implement various features of the portable communication device 10, such as e-mail, Internet access, contact manager and the like. As is described more fully below, the reservation application program 38 comprises a program, logic routine or code that enables the user of the portable communication device to establish reservations and/or receive information related to reservation availability for a variety of resources via a localized communication link between the user's portable communication device and a resource communicator associated with the resource.

A person having ordinary skill in the art of computer programming, and specifically in applications programming for mobile phones, will consider it obvious in view of the description provided herein how to program a mobile phone to operate and carry out the functions described herein with respect to the reservation application 38 (and any interfacing between the reservation application program 38 and other application programs, e.g., messaging application programs, media application programs, electronic payment application programs and the like). Accordingly, details as to the specific programming code have been left out. Also, while the search functionality is carried out via the controller 30 and reservation application program 38 (alone or in conjunction with other application programs) in memory 32 in accordance with inventive aspects, such function also could be carried out via dedicated hardware, firmware, software or combinations thereof without departing from the scope of the present invention.

With continued reference to FIG. 2, the controller 30 interfaces with the aforementioned display 14 and keypad 16 (and any other user interface device), a transmitter/receiver 42 (often referred to as a transceiver), audio processing circuitry, such as an audio processor 44, and a position data receiver (not shown), such as a global positioning system (GPS) receiver.

An antenna 46 is coupled to the transmitter/receiver 42 such that the transmitter/receiver 42 transmits and receives signals via antenna 46, as is conventional. The portable communication device includes an audio processor 44 for processing the audio signals transmitted by and received from the transmitter/receiver. Coupled to the audio processor 44 are a speaker 48 and microphone 50, which enable a user to listen and speak via the portable communication device. Audio data may be passed to the audio processor 44 for playback to the user. The audio data may include, for example, audio data from an audio file stored in the memory 32 and retrieved by the controller 30. The audio processor 44 may include any appropriate buffers, decoders, amplifiers and the like.

In the illustrated embodiment, the portable communication device 10 also includes a localized communicator or localized communication module, which is illustrated, for example, as a near field communication (NFC) module 52 (also referred to as an NFC chipset, an NFC communicator, an NFC interface, an NFC adaptor or the like) or other comparable communication components to establish a localized communication link with a compatible component of another device, e.g., a resource communicator associated with a resource or network of resources, when the devices are brought in relative proximity to each other. The term NFC generally is used to refer to a magnetic field induction communication interface and protocol, such as that jointly developed by Sony and Phillips and adopted as standard by ECMA (ECMA-340) and ISO/IEC (ISO/IEC 18092). The NFC module 52 is coupled to or otherwise includes a NFC coupler 54, e.g., including an inductor or coil in the form of an antenna. In most cases, NFC has a working distance of about ten centimeters or less, but, in some cases, the function may extend to several tens of centimeters (or more). NFC may be used in a passive communication mode where an initiator device provides a carrier field and that is answered by modulating the existing field with a transponder, which may draw operating power from the initiator-provided electro-magnetic field. NFC also may be used in an active communication mode where both the initiator and transponder communicates by generating their own fields in, in which case, both the initiator and transponder typically receive power from a power supply. NFC may be used to configure and initiate another wireless network connection or interface between devices, such as Bluetooth and WiFi connections.

As will be appreciated, the illustration and description of an NFC module 52 is meant to be an example of a localized or proximity communication device, and any appropriate device to establish a localized communication link may be used and may include devices that rely on a capacitive coupling technique, a propagating wave, e.g., electromagnetic, technique, a radio frequency transmission technique, e.g., such as the techniques used for RF identification (RFID) devices, a magnetic field induction technique or any other appropriate techniques.

The portable communication device also may include one or more local wireless interfaces (indicated generally as wireless interface 56), such as an infrared transceiver and/or an RF adapter, e.g., a Bluetooth adapter, WLAN adapter, Ultra-WideBand (UWB) adapter and the like, for establishing communication with an accessory, a hands free adapter, e.g., a headset that may audibly output sound corresponding to audio data transferred from the portable communication device 10 to the adapter, another mobile radio terminal, a computer, or any other electronic device. As will be appreciated, the local wireless interface 56 may be used to transmit data, e.g., a reservation request, from the portable communication device 10, and to receive data, e.g., resource availability information, from another device, e.g., a resource communicator associated with a resource.

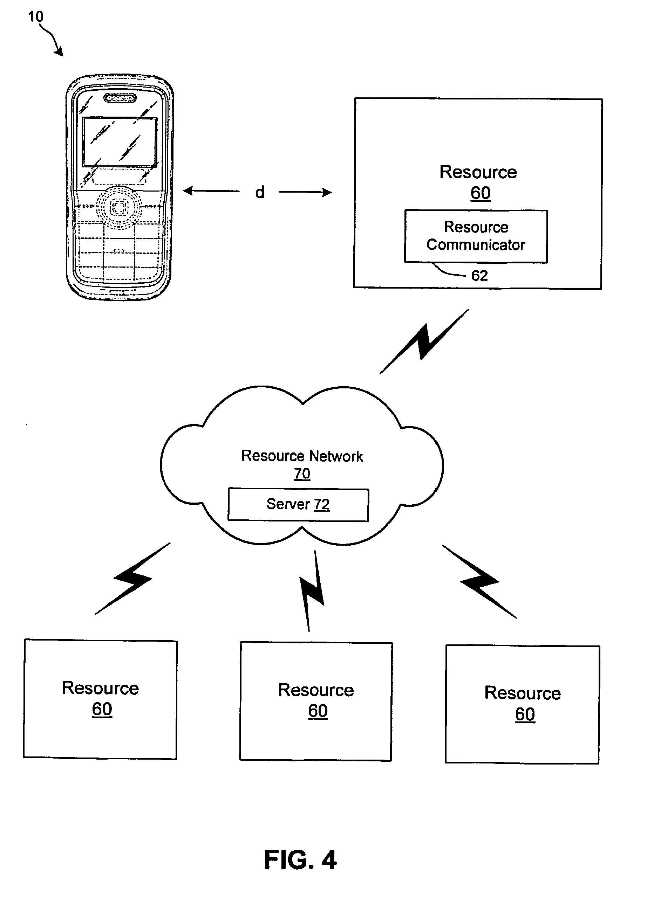

With reference now to FIG. 3 and FIG. 4, aspects of the method, device and system described herein will be described with respect to a portable communication device that facilitates or otherwise is used to make a reservation for use of a resource 60, e.g., a room, venue, location, place, seat within a location, device, arcade game or the like, when the portable communication device 10 is in proximity to the resource 60. The resource 60 includes a resource communicator 62, such as a localized communicator, e.g., a near field communication (NFC) module, that is capable of performing near field communications with the portable communication device 10 (via the NFC module coupled to the portable communication device). The resource communicator will be discussed as being associated with the resource. It is to be appreciated that this includes embodiments where the resource communicator is within or coupled to the resource, e.g., coupled to a pool table, as well as embodiments where the resource communicator is not within or coupled to the given resource, e.g., near a resource reservation center or resource reservation kiosk.

While aspects of the method, device and system described herein are being described with respect to an NFC communication link between the portable communication device 10 and the resource 60, it will be appreciated that one or more other wireless interfaces or communication links may be used to transfer data, e.g., a reservation request, reservation availability information and the like, between the portable communication device 10 and the resource 60 via the resource communicator 62.

As one of ordinary skill in the art will appreciate, NFC means and includes communication that can be accomplished when the portable communication device 10 and the resource 60 (or at least the resource communicator 62 associated with resource 60) are "in proximity" or "in relative proximity," e.g., within a distance "d" of one another where distance "d" is between zero centimeters and several tens of centimeters (including when the housing of the portable communication device 10 and the housing in which the resource communicator 62 is housed are in direct contact with one another). This may be referred to as an "NFC touch."

As is depicted in FIG. 4, another embodiment of the method, device and/or system described herein includes a portable communication device 10 that communicates with a resource 60 via a resource communicator 62, where resource 60 is one of a plurality of resources within a resource network 70. As is discussed below, a requesting portable communication device 10 may receive information regarding alternative resources within the resource network, such as real-time data corresponding to the availability of alternative resources within the resource network. Of course, the various resources 60 within the resource network 70 may be linked or otherwise be in data communication with one another via a wired medium, wireless medium or the like, where information regarding resource availability within the network is stored on server 72. Examples of resource networks may include, but are not limited to, a group of pool tables within a pool hall, a group of video games within an arcade, a group of conference rooms within an office or meeting center, a group of business centers within a hotel or the like.

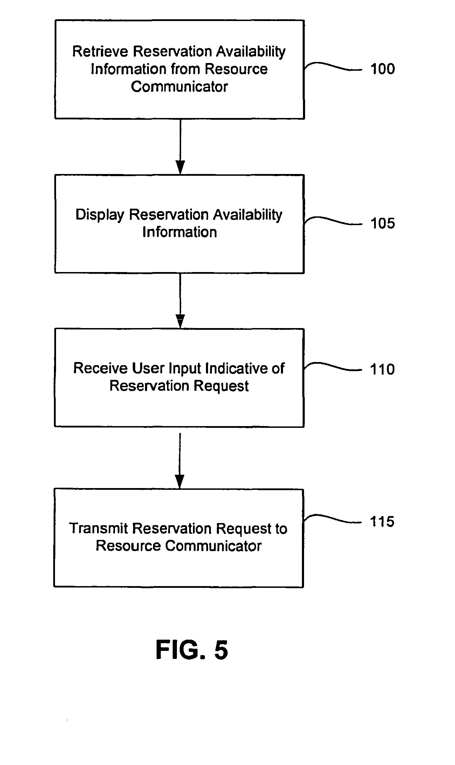

While for purposes of simplicity of explanation, the flow charts or diagrams in FIGS. 5-7 include a series of steps or functional blocks that represent one or more aspects of the relevant operation of the portable communication device 10 and/or the resource 60. It is to be understood and appreciated that aspects of the method, device and/or system described herein are not limited to the order of steps or functional blocks, as some steps or functional blocks may, in accordance with aspects of the present invention occur in different orders and/or concurrently with other steps or functional blocks from that shown or described herein. Moreover, not all illustrated steps or functional blocks of aspects of relevant operation may be required to implement a methodology in accordance with an aspect of the invention. Furthermore, additional steps or functional blocks representative of aspects of relevant operation may be added without departing from the scope of the present invention.

The methodologies illustrated in FIG. 5-7 relate to using a localized or short-range communication interface, e.g., a near field communication (NFC) communication interface, to establish a reservation for use of a resource. Turning now to FIG. 5, a method of reserving a resource, e.g., a conference room, a pool table, an arcade game, a business center or the like, using a portable communication device begins at functional block 100 where the portable communication device (sometimes referred to herein as the requesting portable communication device or the reserving portable communication device) retrieves reservation availability information from a resource communicator associated with a given resource. In one embodiment, the reservation availability information is retrieved via a localized communication link, e.g., an NFC communication link, between a localized communicator, e.g., an NFC module, within the portable communication device and a localized communicator within or otherwise associated with the resource communicator. For example, in response to a user of the portable communication device bringing the portable communication device in proximity to the resource communicator, reservation availability information is wirelessly transferred from the resource communicator to the portable communication device via a localized communication link. Reservation availability information may include information relating to an entire day of resource activity/availability, an entire week of resource activity/availability, an entire month of activity/availability or the like.

At functional block 105, the portable communication device displays the reservation availability information for viewing by a user of the portable communication device. In one embodiment, the reservation availability information may be displayed in the form of a calendar, including availability information as well as detailed information relating to appointments already scheduled for the given resource. Of course, other formats for display of the reservation availability information are contemplated within the scope of the invention, and include, but are not limited to, lists of available time slots or some other graphical representation relating to availability of the desired resource. At functional block 110, the portable communication device receives user input indicative of a reservation request. This user input may include selection of a period of time to reserve the resource for use by the user. Optionally, the received user input may include additional information to be associated with the reservation, e.g., information relating to the use, the number of people involved in the use, other internal notations such as meeting codes or the like.

At functional block 115, the reservation request is transmitted to the resource communicator by the portable communication device. For example, this transmission may include a wireless transfer via a localized communication link, such as an NFC communication link or other suitable communication link. Alternatively, the wirelessly transmitting step may be performed by another communication method, e.g., via a short message service (SMS) message, via a wireless local area connection (WLAN) or the like. The transfer of the reservation request may include personal information specific to the user of the requesting portable communication device, along with the desired reservation time. As is depicted in FIG. 4, the resource communicator also may be connected to a network of resources, such that resource information is available regarding a number of resources within a resource network. For example, the reservation availability information retrieved by the portable communication device (functional block 100) may include information regarding the resource with the greatest availability, the most immediate availability or the like.

Turning now to FIG. 6, an alternative embodiment of a method of reserving a resource using a portable communication device is illustrated. The embodiment illustrated in FIG. 6 will be described with respect to reserving resources, e.g., pool tables, dart boards, video games, or the like, that generally may be operated on a first-come-first-served model, rather than by scheduled appointments. An exemplary environment for the methodology described herein may be a bar or pool hall where the user of a portable communication device wishes to reserve a spot at a pool table, e.g., a spot to play the winner of the prior game on the pool table.

At functional block 120, the portable communication device transmits a reservation request to the resource communicator associated with the resource to be reserved. As is discussed above, transmission of the reservation request may occur via a wireless transmission by way of a localized communication link, e.g., an NFC communication link, between the portable communication device and the resource communicator associated with the resource. In the case of the exemplary pool table embodiment discussed herein, the resource communicator may be coupled to a particular pool table or may be located apart from a given pool table (e.g., at a sign-in or reservation kiosk). In this embodiment, the user of the portable communication device typically is added to a queue associated with the resource upon transmitting the reservation request to the resource communicator associated with the resource to be reserved. For example, a user may approach a pool table that already is in use and place his/her phone in relative proximity to the resource communicator (e.g., NFC module associated with the pool table). In one embodiment, the user's personal information is transferred to the resource communicator, and the user will be assigned a position in resource queue based on the number of people ahead of him/her in line to use the resource. At functional block 125, the portable communication device receives a resource availability message, for example, a message related to how many people are ahead of the user in line to use the resource.

At functional block 130, the portable communication device optionally may receive a resource availability alert indicating that the resource is now available for use by the user of the portable communication device. The resource availability alert may be communicated to the portable communication device in one of a number of ways, including, but not limited to, via e-mail, via text message (short message service SMS), via a multimedia message, or via another wireless communication, such as a phone call with a specific ring tone, or other auditory, visual, or tactile alert. Alternatively, the resource may include an associated display where it is indicated that the resource is ready for the next user. Continuing with the exemplary environment where the resource being reserved is a pool table, the user of the portable communication device may transmit a resource use message to the resource communicator (functional block 135). A resource use message may include a message via a localized communication link, such as an NFC communication link, between the portable communication device and the resource communicator associated with the resource. For example, in the case of the user using a pool table, the user may place his/her portable communication device in proximity to the resource communicator upon approaching the pool table for use. This would indicate to the resource communicator that the resource currently is in use by the given user.

At functional block 140, the portable communication device optionally may transmit a resource release message to the resource communicator. Upon completing use of the resource, the current user of the resource may establish a localized communication link, e.g., a NFC communication link, with the resource communicator and effectively "log out" from using the resource, for example, when the user is finished using the pool table. At this point, the resource communicator will be able to indicate to the next person in the queue that it is his/her turn to use the desired resource.

At functional block 145, the portable communication device optionally may exchange payment information with the resource communicator related to payment for use of the given resource. For example, in the exemplary embodiment of using a pool table, the user may be able to pay for use of the pool table, e.g., by the game or by the hour, based on his/her actual use. In one embodiment, the payment information may be exchanged with the resource communicator via a localized communication link, e.g., a NFC communication link, when the user places his/her portable communication device in proximity to the resource communicator, for example, when logging out or otherwise releasing use of the resource. Of course, the exchange of payment information may include any suitable forms of electronic payment, such as automatic billing to a credit card, automatic billing to an account that the user has established with the provider of the desired resource or the like.

Optionally, upon logging out or otherwise transmitting a resource release message to the resource communicator associated with the desired resource, the user of the portable communication device may be provided with some sort of indicator of performance while using the resource. For example, in the case where the resource is a video game, the resource communicator may transmit certain scoring information to the user's portable communication device via the localized communication link. Such information may include score, such as a high score or a leaderboard of high scores associated with players or users of the given video game. Also, the resource communicator may transmit a resource use or resource log to the user of the portable communication device indicative of the user's use (duration and/or frequency) of that particular device or type of device (in the case of the resource being one of a network of resources, for example, a network of video games that are linked together or the like).

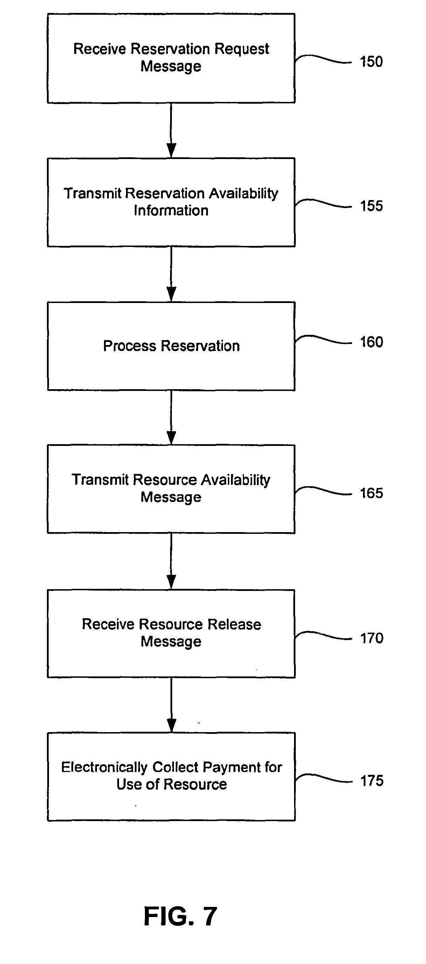

Referring now to FIG. 7, a method of managing a resource or a number of resources (in the case of the resource being part of a network of resources) begins at functional block 150 where the resource receives a reservation request message. As is discussed above, the reservation request message may be transmitted to a resource communicator associated with the resource by way of a localized communication link, e.g., a NFC communication link, with a requesting portable communication device. At functional block 155, the resource, via its resource communicator, transmits reservation availability information to the requesting portable communication device. In one embodiment where the user of the portable communication device wishes to schedule an appointment for use of the resource, the reservation availability information may include a calendar, a list or the like, including information relating to resource activity/availability over a given period of time. Alternatively, in the embodiment where the resource is generally available on a first-come-first-served basis, the reservation availability information may include the user's position in a queue for use of the resource.

At functional block 160, the reservation is processed. This can include receipt and storage or scheduling of a desired time slot, as requested by a user. Alternatively, the processing of the reservation may include simply adding the user to the queue of individuals waiting to make use of the resource. Optionally, at functional block 165, the resource, via the resource communicator or another suitable wireless interface, may transmit a resource availability message to the requesting portable communication device. As is discussed above, the resource availability message may include an e-mail, a text message, a multimedia message or any other suitable form of wireless communication. At functional block 170, the resource receives a resource release message, for example, via a NFC communication link between the portable communication device and the resource communicator associated with the resource. As is discussed above, the resource release message has the effect of a user of the portable communication device logging out or otherwise indicating that he/she is finished using the given resource. As is discussed above, receipt of a resource release message from the portable communication device indicates to the resource that the next person in the queue may be alerted that it is their turn to use the resource.

At functional block 175, the resource optionally may electronically collect payment from the user of the portable communication device for use of the resource. For example, in the above-described environment where the resource being a pool table, the resource, via the resource communicator, may electronically collect payment based on a number of games or an amount of time that the pool table was used by the user. As is discussed above, electronic payment collection may be achieved via any suitable means.

It will be appreciated that a portable communication device having reservation functionality provides the user with the capability of quickly and efficiently making reservations for a variety of different resources via a localized communication link. Further, the user of a portable communication device may be able to access information about a group or network of resources, including which resource may be most immediately available.

As will be appreciated by one of skill in the art, computer program elements and/or circuitry elements of the invention may be embodied in hardware and/or in software (including firmware, resident software, micro-code, etc.). The invention may take the form of a computer program product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means".

In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of 14 several illustrated embodiments, such feature may be combined with one or more other features of the other embodiments, as may be desired and advantageous for any given or particular application.

## Claims

1. A method of reserving a resource (60) via a portable communication device (10), the method comprising:
wirelessly transmitting (120) a reservation request to a resource communicator (62) via a near field communication, NFC, touch between the portable communication device (10) and the resource communicator (62) while the portable communication device is within proximity to the resource communicator for NFC protocol operation, the reservation request adding the user of the portable communication device to a queue to use the resource on a first-come-first-serve basis;
wirelessly receiving (130) a resource availability alert from the resource indicating that the resource is currently available for use by the user of the portable communication device; and
wirelessly transmitting (135), via an NFC touch, a resource use message to the resource communicator (62) to communicate to the resource that the resource is currently in use by the user of the portable communication device.

2. The method according to claim 1, further comprising receiving (125) a resource availability message from the resource, the resource availability message indicating how many people are ahead of the user of the portable communication device in the queue to use the resource.

3. The method according to claim 1, further comprising wirelessly transmitting (140), via an NFC touch, a resource release message to the resource communicator upon completion of use of the resource by the user of the portable communication device.

4. The method according to claim 1, further comprising exchanging (145) payment information with the resource communicator, the payment information being representative of payment for use of the resource.

5. A method of providing a user of a portable communication device (10) with a reservation for a resource (60), the method comprising:
wirelessly receiving (120) a reservation request with a resource communicator (62) via a near field communication, NFC, touch from the portable communication device (10) while the portable communication device is within proximity to the resource communicator for NFC protocol operation;
adding the user of the portable communication device to a queue to use the resource on a first-come-first-serve basis;
wirelessly transmitting (130) a resource availability alert to the portable communication device indicating that the resource is currently available for use by the user of the portable communication device; and
wirelessly receiving (135), via an NFC touch, a resource use message from the portable communication device, the resource use message communicating to the resource that the resource is currently in use by the user of the portable communication device.

6. The method according to claim 5, further comprising transmitting (125) a resource availability message to the portable communication device, the resource availability message indicating how many people are ahead of the user of the portable communication device in the queue to use the resource.

7. The method according to claim 5, further comprising wirelessly receiving (140), via an NFC touch, a resource release from the portable communication device upon completion of use of the resource by the user of the portable communication device.

8. The method according to claim 5, further comprising exchanging (145) payment information with the portable communication device, the payment information being representative of payment for use of the resource.

## Patentansprüche

1. Verfahren zum Reservieren einer Ressource (60) mittels einer tragbaren Kommunikationsvorrichtung (10), wobei das Verfahren umfasst:
drahtloses Senden (120) einer Reservierungsanfrage an einen Ressourcenkommunikator (62) mittels eines Nahfeldkommunikations, NFC, -Kontakts zwischen der tragbaren Kommunikationsvorrichtung (10) und dem Ressourcenkommunikator (62), während die tragbare Kommunikationsvorrichtung in der Nähe des Ressourcenkommunikators für eine NFC-Protokolloperation ist, wobei die Reservierungsanfrage den Benutzer der tragbaren Kommunikationsvorrichtung einer Warteschlange zum Verwenden der Ressource in der Reihenfolge des Eingangs hinzufügt;
drahtloses Empfangen (130) eines Ressourcenverfügbarkeitsalarms von der Ressource, die anzeigt, dass die Ressource aktuell für eine Verwendung durch den Benutzer der tragbaren Kommunikationsvorrichtung zur Verfügung steht; und
drahtlose Senden (135), mittels eines NFC-Kontakts, einer Ressourcenverwendungsnachricht an den Ressourcenkommunikator (62), um der Ressource mitzuteilen, dass die Ressource aktuell in Verwendung durch den Benutzer der tragbaren Kommunikationsvorrichtung ist.

2. Verfahren nach Anspruch 1, weiterhin umfassend Empfangen (125) einer Ressourcenverfügbarkeitsnachricht von der Ressource, wobei die Ressourcenverfügbarkeitsnachricht anzeigt, wie viele Personen vor dem Benutzer der tragbaren Kommunikationsvorrichtung in der Warteschlange zum Verwenden der Ressource sind.

3. Verfahren nach Anspruch 1, weiterhin umfassend drahtloses Senden (140), mittels eines NFC-Kontakts, einer Ressourcenfreigabenachricht an den Ressourcenkommunikator beim Beenden einer Verwendung der Ressource durch den Benutzer der tragbaren Kommunikationsvorrichtung.

4. Verfahren nach Anspruch 1, weiterhin umfassend Austauschen (145) einer Bezahlinformation mit dem Ressourcenkommunikator, wobei die Bezahlinformation eine Bezahlung zur Verwendung der Ressource darstellt.

5. Verfahren zum Ausstatten eines Benutzers einer tragbaren Kommunikationsvorrichtung (10) mit einer Reservierung für eine Ressource (60), wobei das Verfahren umfasst:
drahtloses Empfangen (120) einer Reservierungsanfrage mit einem Ressourcenkommunikator (62) mittels eines Nahfeldkommunikations, NFC, -Kontakts von der tragbaren Kommunikationsvorrichtung (10), während die tragbare Kommunikationsvorrichtung in der Nähe des Ressourcenkommunikators für eine NFC-Protokolloperation ist;
Hinzufügen des Benutzers der tragbaren Kommunikationsvorrichtung zu einer Warteschlange zum Verwenden der Ressource in der Reihenfolge des Eingangs;
drahtlose Senden (130) eines Ressourcenverfügbarkeitsalarms an die tragbare Kommunikationsvorrichtung, die anzeigt, dass die Ressource aktuell für eine Verwendung durch den Benutzer der tragbaren Kommunikationsvorrichtung zur Verfügung steht; und
drahtloses Empfangen (135), mittels eines NFC-Kontakts, einer Ressourcenverwendungsnachricht von der tragbaren Kommunikationsvorrichtung, wobei die Ressourcenverwendungsnachricht der Ressource mitteilt, dass die Ressource aktuell in Verwendung durch den Benutzer der tragbaren Kommunikationsvorrichtung ist.

6. Verfahren nach Anspruch 5, weiterhin umfassend Senden (125) einer Ressourcenverfügbarkeitsnachricht an die tragbare Kommunikationsvorrichtung, wobei die Ressourcenverfügbarkeitsnachricht anzeigt, wie viele Personen vor dem Benutzer der tragbaren Kommunikationsvorrichtung in der Warteschlange zum Verwenden der Ressource sind.

7. Verfahren nach Anspruch 5, weiterhin umfassend drahtloses Empfangen (140), mittels eines NFC-Kontakts, einer Ressourcenfreigabe von der tragbaren Kommunikationsvorrichtung beim Beenden einer Verwendung der Ressource durch den Benutzer der tragbaren Kommunikationsvorrichtung.

8. Verfahren nach Anspruch 5, weiterhin umfassend Austauschen (145) einer Bezahlinformation mit der tragbaren Kommunikationsvorrichtung, wobei die Bezahlinformation eine Bezahlung zur Verwendung der Ressource darstellt.

## Revendications

1. Procédé de réservation d'une ressource (60) par l'intermédiaire d'un dispositif de communication portable (10), le procédé consistant à :
émettre sans fil (120) une demande de réservation vers un communicateur de ressource (62) par l'intermédiaire d'un contact tactile par communication en champ proche, NFC, entre le dispositif de communication portable (10) et le communicateur de ressource (62) pendant que le dispositif de communication portable est à proximité du communicateur de ressource pour un fonctionnement par protocole NFC, la demande de réservation ajoutant l'utilisateur du dispositif de communication portable à une file d'attente pour l'utilisation de la ressource par une méthode du type premier arrivé premier servi ;
recevoir sans fil (130) une alerte de disponibilité de ressource en provenance de la ressource, indiquant que la ressource est actuellement disponible pour une utilisation par l'utilisateur du dispositif de communication portable ; et
émettre sans fil (135), par l'intermédiaire d'un contact tactile NFC, un message d'utilisation de ressource vers le communicateur de ressource (62) afin de communiquer à la ressource le fait que la ressource est en cours d'utilisation par l'utilisateur du dispositif de communication portable.

2. Procédé selon la revendication 1, consistant en outre à recevoir (125) un message de disponibilité de ressource en provenance de la ressource, le message de disponibilité de ressource indiquant le nombre de personnes se trouvant avant l'utilisateur du dispositif de communication portable dans la file d'attente pour l'utilisation de la ressource.

3. Procédé selon la revendication 1, consistant en outre à émettre sans fil (140), par l'intermédiaire d'un contact tactile NFC, un message de libération de ressource vers le communicateur de ressource lors de l'achèvement de l'utilisation de la ressource par l'utilisateur du dispositif de communication portable.

4. Procédé selon la revendication 1, consistant en outre à échanger (145) des informations de paiement avec le communicateur de ressource, les informations de paiement étant représentatives d'un paiement pour l'utilisation de la ressource.

5. Procédé destiné à fournir à un utilisateur d'un dispositif de communication portable (10) une réservation d'une ressource (60), le procédé consistant à :
recevoir sans fil (120) une demande de réservation au moyen d'un communicateur de ressource (62) par l'intermédiaire d'un contact tactile par communication en champ proche, NFC, en provenance du dispositif de communication portable (10) pendant que le dispositif de communication portable est à proximité du communicateur de ressource pour un fonctionnement par protocole NFC ;
ajouter l'utilisateur du dispositif de communication portable à une file d'attente d'utilisation de la ressource par une méthode du type premier arrivé premier servi ;
émettre sans fil (130) une alerte de disponibilité de ressource vers le dispositif de communication portable indiquant que la ressource est disponible à l'instant courant pour une utilisation par l'utilisateur du dispositif de communication portable ; et
recevoir sans fil (135), par l'intermédiaire d'un contact tactile NFC, un message d'utilisation de ressource en provenance du dispositif de communication portable, le message d'utilisation de ressource communiquant à la ressource le fait que la ressource est en cours d'utilisation par l'utilisateur du dispositif de communication portable.

6. Procédé selon la revendication 5, consistant en outre à émettre (125) un message de disponibilité de ressource vers le dispositif de communication portable, le message de disponibilité de ressource indiquant le nombre de personnes se trouvant avant l'utilisateur du dispositif de communication portable dans la file d'attente pour l'utilisation de la ressource.

7. Procédé selon la revendication 5, consistant en outre à recevoir sans fil (140), par l'intermédiaire d'un contact tactile NFC, une libération de ressource en provenance du dispositif de communication portable lors de l'achèvement de l'utilisation de la ressource par l'utilisateur du dispositif de communication portable.

8. Procédé selon la revendication 5, consistant en outre à échanger (145) des informations de paiement avec le dispositif de communication portable, les informations de paiement étant représentatives d'un paiement pour l'utilisation de la ressource.
